# EUROPEAN PATENT APPLICATION

(11) **EP 1 357 491 A1**
(43) Date of publication of application: **29.10.2003**
(21) Application number: 01272342.5
(22) Date of filing: 27.12.2001
(51) Int. Cl.: G06F 17/60

(54) **MEDIATING DEVICE**

(30) Priority: 27.12.2000 JP 2000399066
(71) Applicant: ARKRAY, Inc., Kyoto-shi, Kyoto 601-8045 (JP)
(72) Inventor: KATOU, Shigeru c/o ARKRAY, INC., Kyoto-shi, Kyoto 601-8045 (JP); HARADA, Toshihiko c/o ARKRAY, INC., Kyoto-shi, Kyoto 601-8045 (JP); TAKAHASHI, Yoshinori c/o ARKRAY, INC., Kyoto-shi, Kyoto 601-8045 (JP)
(74) Representative: Piésold, Alexander J.
(86) International application number: JP0111516
(87) International publication number: WO02052471

(57) **Abstract**

A mediating system in which a system mediates a transaction between a buyer and a seller, and in which a system usage charge collected from vendors that have joined the system as sellers is determined based on an evaluation of each vendor, making it possible to increase the eagerness of each trader and induce motivation. A server of the provider A of the mediating system makes an overall evaluation of each vendor (user C) based on, for example, the time to reply to a request for quote from a user B who is a buyer, the negotiation attitude, the reasonableness of the price, the delivery time, product quality, and business situation, etc., and determines the usage charge according to the evaluation.

## Description

### TECHNICAL FIELD

The present invention relates to so-called mediating systems that use the Internet or the like, in which an order from a buyer (consumer) is received and this order is presented to a plurality of vendors (suppliers) who are urged to give quotes, and a transaction is made between the buyer and the supplier.

### BACKGROUND ART

With the advancements made in telecommunications technologies in recent years, it is becoming increasingly easy to configure networks in order for businesses to negotiate the procurement of raw materials and products, for example, based on use of a communications platform such as the Internet.

As one kind of such networks, there are so-called mediating systems, in which an order from a buyer is received and this order is presented to a plurality of vendors who are urged to give quotes, and a transaction is made between the vendor that proposes the most favorable conditions for the buyer and that buyer.

In these mediating systems, a flat charge usually is collected as a network usage charge from the suppliers who are members. And there are also cases in which the network usage charge is discounted in accordance with each member's usage level or usage period.

However, conventional mediating systems such as these have the following problems.

First, there are cases in which a vendor neglects to improve his service because he indulges in thinking that orders will come if he joins the mediating system. In situations such as this, the very existence of the system is put at risk due to factors such as a decreasing number of orders from buyers to the mediating system and buyers leaving the system.

Second, among vendors, there are cases in which vendors that strive to offer excellent service feel dissatisfaction at receiving the same treatment as inferior vendors in regard to the network usage charge.

Third, in the above-mentioned case in which only long-time users are afforded privileges, new users may feel a sense of unfairness. In situations such as this, the eagerness of members to increase their rate of usage is lessened, and there is the risk of the opposite effect occurring.

### DISCLOSURE OF INVENTION

In order to solve these problems, it is an object of the present invention to provide a mediating system that mediates a transaction between a buyer and a seller, and in which a system usage charge collected from a trader who has joined the system as a seller is determined based on an evaluation of each trader, thus making it possible to increase the eagerness of business entities and induce motivation.

In order to achieve this object, a mediating device of the present invention, which receives a request from a device of a consumer via a communications network and presents it to a device of a supplier, includes an evaluation factor storage unit for storing an evaluation factor related to a response of the supplier to the request, and a treatment determining unit for determining a treatment for each supplier based on the evaluation factor.

In this configuration, the response of the supplier to the request of the consumer is evaluated by the provider of the mediating device, and the treatment for each supplier is determined based on this evaluation, so it is possible to induce motivation in the supplier to strive to improve his response to the request of the consumer. Moreover, it is preferable that the treatment determined by the treatment determining unit is an amount of a charge collected from each supplier.

Furthermore, it is preferable that the evaluation concerning the response of the supplier is at least one of the evaluation items including promptness of quote reply, reasonableness of price, negotiation attitude, delivery time, presence or absence of defective products, and product quality.

It is preferable that the mediating device is further provided with an information obtaining unit for obtaining information related to a business situation of the supplier, and that the business situation of each supplier obtained by the information obtaining unit is included in the evaluation factors. It should be noted that information related to the business situation of the supplier may be obtained by using an external marketing information database, or information may be procured independently by an administrator of the mediating device and input via the information obtaining unit.

It is preferable that the mediating device is further provided with a first rating unit for ranking all the suppliers based on an evaluation point average for a predetermined period, and a second rating unit for evaluating each supplier based on a transition in the rankings of the first rating unit in a period longer than the predetermined period, and that a treatment of each supplier is determined based on the evaluation of the second rating unit.

In this way, when ranking suppliers, evaluations with a comparatively long-term perspective are possible, not just evaluations for single acts, so very reasonable ranking can be performed.

Furthermore, on a computer-readable program recording medium of the present invention, a program is recorded that executes on a computer a process in which a request is received from a device of a consumer via a communications network and is presented to a device of a supplier, an evaluation factor related to the response of the supplier to the request is stored in an evaluation factor storage unit, and a treatment for each supplier is determined based on the evaluation factor. The mediating device of the present invention can be realized by having a computer read this program recording medium.

### BRIEF DESCRIPTION OF DRAWINGS

FIG. 1 is a diagram showing the structure of a mediating system according to an embodiment of the present invention.
FIG. 2 is a diagram showing the contents stored in an evaluation table provided in a system provider's server (mediating device) in the mediating system.
FIG. 3 is a diagram showing evaluation items extracted from the data of the evaluation table and the evaluation criteria for them.
FIG. 4 is a diagram showing an example of the ranks graded for the evaluation points and the system usage charges determined in accordance with these ranks.
FIG. 5 is a diagram showing the evaluation items of a performance rating used in a mediating system according to another embodiment of the present invention and the evaluation criteria therein.
FIG. 6 is a diagram showing the evaluation items of a sentiment rating used in the mediating system according to this other embodiment and the evaluation criteria for them.

### BEST MODE FOR CARRYING OUT THE INVENTION

### Embodiment 1

Referring to the accompanying drawings, the following is an explanation of an embodiment of the present invention.

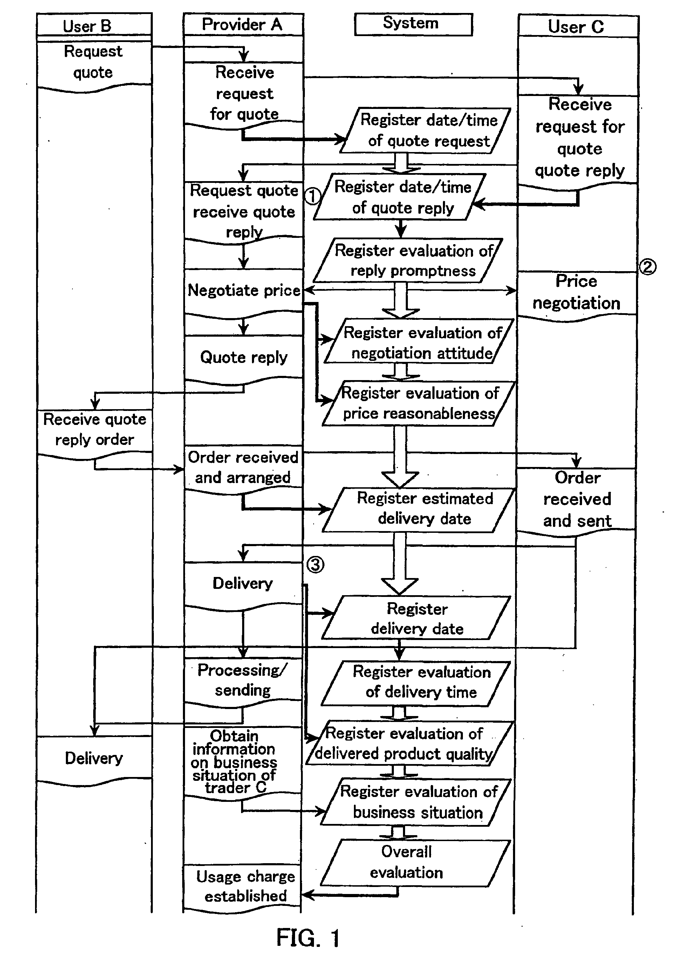

As shown in FIG. 1, a mediating system according to this embodiment is constructed by connecting via the Internet or the like a computer of a buyer B, a server (mediating device) of a provider A, and a computer of a vendor C. It should be noted that, although omitted from the diagram, multiple business entities may join as either buyers B or vendors C.

It also should be noted that, in order to join this system, it is necessary to register in advance with the provider A, and a trader who joins as a vendor obtains the right to participate in bidding on the one hand, but also bears the obligation of paying the system usage charge regardless of whether or not it makes any transaction. However, this system usage charge is not a flat charge, but rather its amount is determined in accordance with evaluations of each vendor. Furthermore, a trader who joins as a buyer B is not required to pay the system usage charge, and can use the system free of charge.

The following is an explanation of the operation of this mediating system, with reference to FIG. 1.

First, the server of the provider A receives via the network a request for the purchase of a product or an order for materials (request for quote) from the computer of the buyer B.

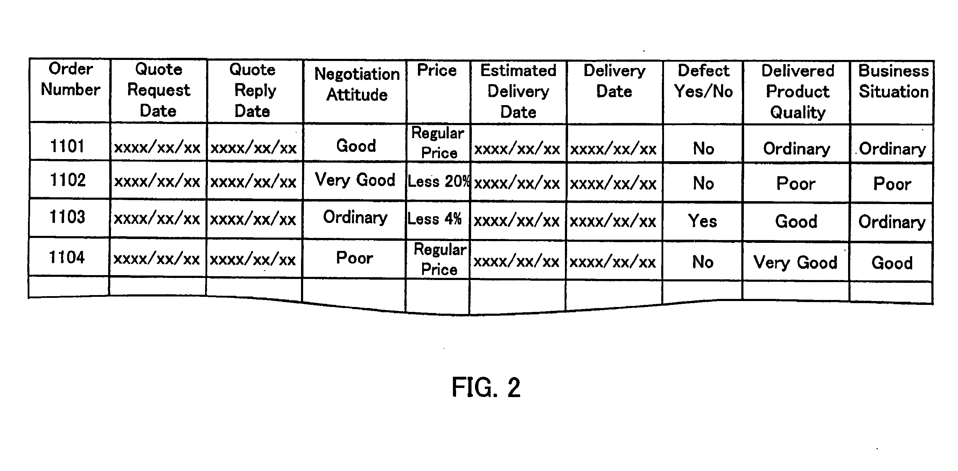

The server of the provider A has an evaluation table like that shown in FIG. 2 in a storage device, and, when a request for quote is received, stores the date and time that this request for quote was received.

Next, the server of the provider A selects from among the vendors C at least one trader who is suitable for a request for quote, and sends a request for quote via the network to the computer of each selected vendor C.

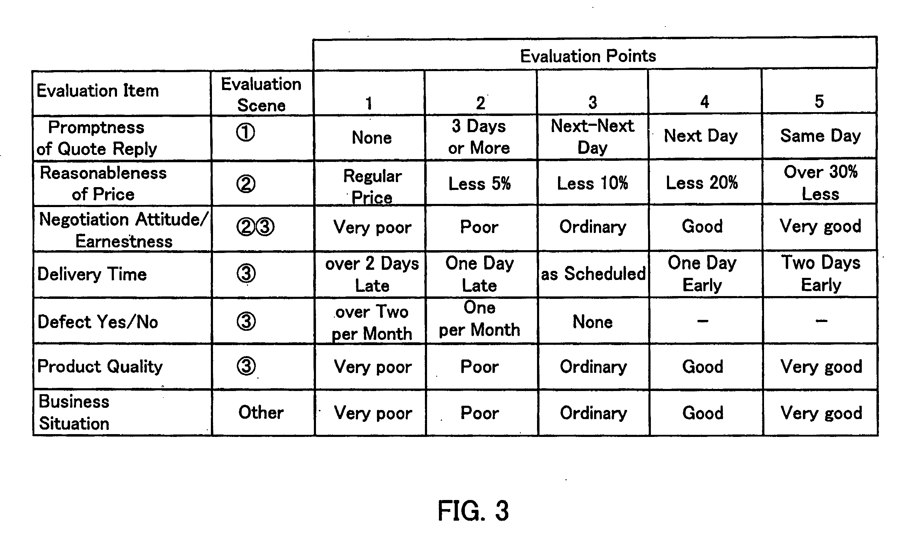

The vendors C that received a request for quote send from their computer a quote reply to the server of the provider A via the network. The server of the provider A stores the date and time of the received quote reply in the evaluation table (evaluation factor storage unit) as shown in FIG. 2. Furthermore, the server of the provider A calculates the time (speed of quote reply) from the day of the request for quote until the day of the quote reply that are stored in the evaluation table, and uses this as one evaluation factor for each vendor C. The server of the provider A converts the calculated speed of quote reply into evaluation points in accordance with a conversion chart as shown in FIG. 3.

Furthermore, as shown in FIG. 1, there are also cases in which price negotiations occur between the provider A and the vendor C. In this case, the vendor C's negotiation attitude and the price are registered in the evaluation table shown in FIG. 2 by the server of the provider A. The server converts the registered negotiation attitude and the price into evaluation points in accordance with the conversion chart shown in FIG. 3.

Next, as shown in FIG. 1, the server of the provider A sends the quote reply of each vendor C to the computer of the buyer B via the network. Having received the quote replies, the buyer B examines which vendor to place the order with, and places an order by sending the result of this examination from his computer to the server of the provider A.

At this time, the server of the provider A places the order from the buyer B to the computer of the vendor C that was selected for the order, and registers the estimated date of delivery in the evaluation table shown in FIG. 2.

Having received the order, the vendor C delivers on it by preparing and shipping the ordered product. It should be noted that the delivery may be directly to the buyer B as shown in FIG. 1, or it may be delivered first to the provider A, for example in cases in which the provider A performs further processing. In either case, notification that the delivery has been processed is sent from the computer of the vendor C to the server of the provider A, and the server registers the delivery date in the evaluation table shown in FIG. 2. The server calculates the period of time (delivery period) from the estimated date of delivery until the date of delivery in the evaluation table and converts this into evaluation points in accordance with the conversion chart shown in FIG. 3.

Moreover, when a delivery has been made, the provider A registers whether or not there were any defective products as well as the quality of the delivered product in the server's evaluation table (see FIG. 2), and also converts these into evaluation points in accordance with the conversion chart of FIG. 3.

Furthermore, the provider A obtains information related to the business situation of each vendor C, and registers this in the evaluation table shown in FIG. 2, and also converts it into evaluation points in accordance with the conversion chart of FIG. 3.

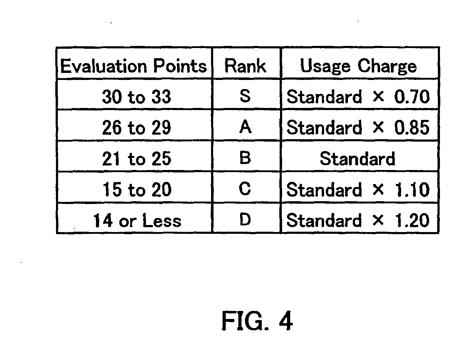

In this way, for each order from the buyer B, the server of the provider A calculates evaluation points in regard to each vendor C for the seven types of evaluation items shown in FIG. 3. Then, the vendors are ranked based on the calculated evaluation points. An example of the ranking based on evaluation points is shown in FIG. 4. As mentioned above, the system usage charge paid by the vendor to the provider A is determined based on this ranking. In the example shown in FIG. 4, vendors ranked in the highest rank, class S, for example, should pay an amount that is 70% of the standard system usage charge. Conversely, business entities ranked in the lowest rank, class D, pay an amount that is 20% more than the standard.

It follows that, with this mediating system, since the system usage charge is determined based on evaluations of the vendors by the provider, the system usage charge can be reduced by each vendor as a result of continuing in proper business activities such as improving service or delivered product quality. Moreover, with effort to obtain a good evaluation, even a new member can reduce his system usage charge in a short period.

The benefits of this mediating system for the three parties, the provider A, the buyer B, and the vendor C, are as follows. First, since the provider A does not collect a system usage charge from the buyer B, the buyer B can use the system free of charge, and moreover, becomes able to procure products and the like under favorable conditions. The vendor C is able to bid on orders from many buyers B over the network, and can anticipate an expansion of business opportunities, as well as enjoying the convenience of the information exchange from using the network. The provider A, on the other hand, can sustain appropriate business activities by reliably providing products and the like to the buyer B, and is able to gain the confidence of the buyer B.

It should be noted it is preferable that the results of the evaluations of all vendors by the provider A are sent via the network to the computers of the vendors C and made public. In this way it is possible to maintain the fairness of the evaluations.

### Embodiment 2

The following is an explanation of another embodiment of the present invention.

The mediating system according to this embodiment has the same structure as the mediating system of the first embodiment, but whereas the system of the first embodiment evaluates the vendor for each transaction, the mediating system of this embodiment differs on the point that, in addition to evaluations for each transaction, evaluations during fixed periods are also taken into account.

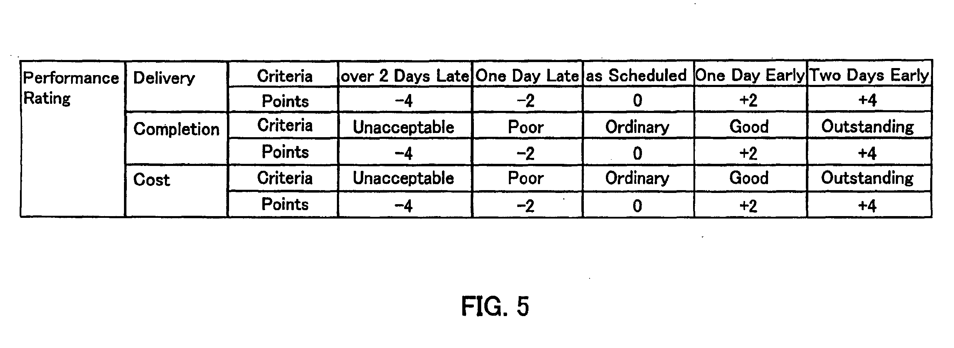

At predetermined intervals, for example each month, the server of the provider A in this mediating system determines the averages for all the transactions in that period with regard to, for example, the three items shown in FIG. 5 (delivery, completion, cost), and converts these into points in accordance with the criteria shown in FIG. 5. This evaluation is called a performance rating. It should be noted that the server ranks all the vendors based on the result of totaling all the points of this performance rating, and stores the top ten companies therein, and the bottom ten companies.

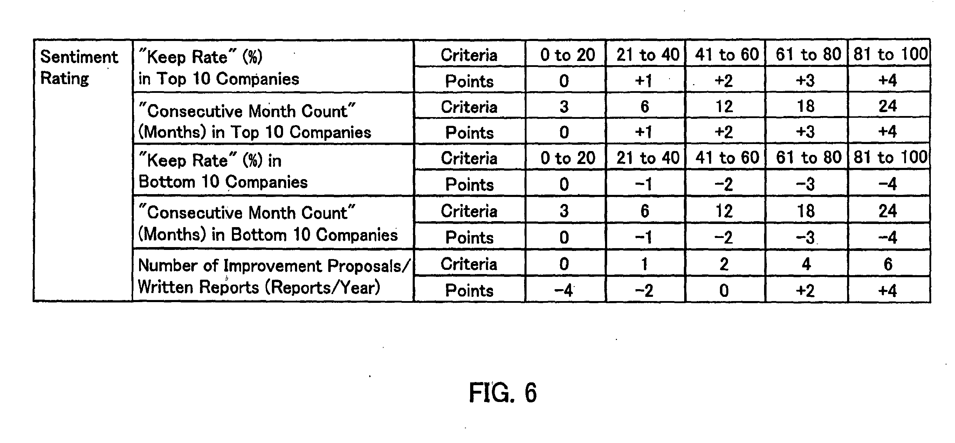

Also, at predetermined intervals longer than the period for which this performance rating is performed (for example, one year), an evaluation is performed based on the results of all the performance ratings in that period in regard to, for example, the items shown in FIG. 6. This evaluation is called a sentiment rating.

In the example shown in FIG. 6, the server of the provider A determines, for the performance ratings for each vendor performed in one year (a total of twelve if performed once a month), a "keep rate" that expresses the proportion of times a company has been ranked in the top ten or bottom ten companies, and a "consecutive month count" that expresses the number of months a company has been ranked consecutively in the top ten or bottom ten companies in that year, and converts these into points. Furthermore, as shown in FIG. 6, in order to have the position of each vendor reflected in the evaluation, it is effective to include in the evaluation factors of the sentiment rating the number of improvement proposals or written reports submitted in that year to the provider A by each vendor.

Furthermore, the server totals and stores the points of all the items in the sentiment rating for each vendor every year. Then, at predetermined intervals, every three years for example, it ranks the vendors in terms of that period by aggregating the points of all the sentiment ratings performed in that period.

For example, in the case of a sentiment rating being performed once every year with the conditions shown in FIG. 6, special remuneration can be given to vendors that fulfill predetermined conditions such as that, after aggregating three year's worth of sentiment rating points every three years, the aggregate value exceeds, for example, +100 points. Special remuneration refers to such things as a special discount for the system usage charge, and, other than that, a certificate of merit or a presentation of a monetary reward, or the right to participate in all transactions. Conversely, vendors that end up with less than minus 50 points for example, can be urged to heed caution. Further still, vendors that have extremely poor evaluations, less than minus 100 points for example, can be divested of their membership rights in the mediating system, or other such measures are possible.

In this way, not just evaluations for single transactions such as in the first embodiment, but also evaluations with a long-term perspective are enabled by this embodiment, so there is the benefit of being able to perform ranking very reasonably.

It should be noted that the above-described embodiments are not to be considered as limiting the present invention, and that various modifications are possible within the scope of the invention. For example, the above-described specific evaluation factors, evaluation criteria, and so on are merely examples, and it is possible to freely set up the particulars according to circumstances.

### INDUSTRIAL APPLICABILITY

As explained above, with the present invention, a mediating system can be provided in which the system usage charge that is collected from vendors (suppliers) that are members of the mediating system is determined based on an evaluation of each vendor, thus making it possible to increase the eagerness of vendors and induce motivation.

## Claims

1. A mediating device in which a request from a device of a consumer is received via a communications network and presented to a device of a supplier, comprising:
an evaluation factor storage unit for storing an evaluation factor related to a response of the supplier to the request; and
a treatment determining unit for determining a treatment for each supplier based on the evaluation factor.

2. The mediating device according to claim 1, wherein the treatment determined by the treatment determining unit is an amount of a charge collected from each supplier.

3. The mediating device according to claim 1 or 2, wherein the evaluation concerning the response of the supplier is at least one of the evaluation items including promptness of quote reply, reasonableness of price, negotiation attitude, delivery time, presence or absence of defective products, and product quality.

4. The mediating device according to any one of the claims 1 to 3, further comprising:
an information obtaining unit for obtaining information related to a business situation of the supplier;
wherein the business situation of each supplier obtained by the information obtaining unit is included in the evaluation factors.

5. The mediating device according to any one of the claims 1 to 4, further comprising:
a first rating unit for ranking all the suppliers based on an evaluation point average for a predetermined period; and
a second rating unit for evaluating each supplier based on a transition in the ranking of the first rating unit in a period longer than the predetermined period;
wherein a treatment of each supplier is determined based on the evaluation of the second rating unit.

6. A computer-readable program recording medium on which is recorded a program that executes on a computer a process including:
a step of receiving a request from a device of a consumer via a communications network and presenting it to a device of a supplier;
a step of storing in an evaluation factor storage unit an evaluation factor related to a response of the supplier to the request; and
a step of determining a treatment for each supplier based on the evaluation factor.

7. A program executing on a computer a process including:
a step of receiving a request from a device of a consumer via a communications network and presenting it to a device of a supplier;
a step of storing in an evaluation factor storage unit an evaluation factor related to a response of the supplier to the request; and
a step of determining a treatment for each supplier based on the evaluation factor.
